# EUROPEAN PATENT APPLICATION

(11) **EP 1 106 522 A1**
(43) Date of publication of application: **13.06.2001**
(21) Application number: 00310906.3
(22) Date of filing: 07.12.2000
(51) Int. Cl.: B65D 43/02, B65D 81/26

(54) **Container and removable lid assembly**

(30) Priority: 07.12.1999 FR 9915402
(71) Applicant: Bestfoods, Englewood Cliffs, NJ 07632 (US)
(72) Inventor: Decamps, Christophe, 60150 Thourotte (FR); Marcel, Henri Pierre, 40140 Soustons (FR)
(74) Representative: Stevens, Ian Edward

(57) **Abstract**

An assembly of a container and a detachable protective lid (2) that cooperate via their edges to close the container (1). They include separating lugs (5). The lid includes detachable tabs (15) for locking the lid on the container, which when they are detached and the container is closed by the lid, freeing drainage channels formed in the edge (8,9) of the container.

## Description

### FIELD OF THE INVENTION

The present invention relates to an assembly of a container and a removable protective lid, arranged to co-operate via their edges and thus close the container.

### BACKGROUND OF THE INVENTION

The term container as used in the context of the present invention should be considered in a general functional sense which covers many other notions such as those of bowl, pot, punnet, jar, drum, flask and other containers.

The invention arises from problems of handling of a food which is practically ready for consumption and which only requires to be reheated and rehydrated with hot water poured into a container after having removed its lid, before serving this food. The food referred to can be dry pasta, rice, and, generally speaking, any food to be re-hydrated. One such problem is that of the difficulty for consumers to avoid burning themselves when holding a container containing hot food in order to open its lid. Another problem is a difficulty draining hot water after heating and re-hydrating the food.

First it was necessary, since this was a matter of the food industry, to try to ensure the hygienic preservation of the contents of container, from the preparation and all along the distribution chain. The applicant also tried to simplify the drainage of the food once it has been heated with hot water, and thus it proposes its invention.

An object of the present invention is to provide a container that is accessible by raising its lid in such a way as to avoid burning when the container is full of hot fluids.

Other objects of the invention will become apparent to one skilled in the art by reference to the specification.

### SUMMARY OF THE INVENTION

The invention relates to an assembly of a container and a removable protective lid arranged to co-operate via their edges and thus close the container. The assembly is characterized by the fact that it comprises detachable means for locking the lid on the container in order, after detachment and in the closed position of the lid, to free drainage apertures.

The invention is notable for the double function of locking and drainage assured by the detachable means.

In the attached position, the detachable locking tabs ensure the inviolability of the container and proof of hygienic security for consumers. In the detached position, the tabs transform the assembly of container and its lid into a drainage device permitting the evacuation of the water while ensuring that the food is retained in the container.

In the preferred embodiment of the assembly of the invention, the lid has at least one detachable tab locked onto the container. Preferably, the detachable locking tab includes a pair of mortises formed therein. Also, preferably, a pair of tenons is formed on the edge of the container. With the mortises receiving the tenons, the detachable locking tab is locked onto the container by a mortise and tenon joint.

Also by preference, the detachable locking tab is arranged to uncover an outflow and drainage channel formed in the container, advantageously on its edge.

Linked to the problem of drainage and thus of evacuating hot water from re-heating, the present invention resolves the problem of gripping a container filled with hot water. This problem is that of the difficulty, for consumers, of holding container, in order to lift lid without burning themselves.

The present invention also relates to an assembly of a container and a removable lid of the type defined above, where the container and the lid each have edges arranged thereon by which the container and the lid co-operate to close the container. The edge of the container has drainage channels formed in it. The container and said lid are arranged to be able to exert a supporting action on the container while raising and separating said lid without touching the wall of the container. Furthermore, the container comprises lower separating lugs projecting like ears therefrom and the lid comprises upper separating lugs projecting like ears therefrom, the lower separating lugs each having raised parts formed thereon, the upper lugs having apertures formed therein, and the raised parts are accessible through the apertures.

Preferably, the container is made of a material that does not conduct heat.

### DETAILED DESCRIPTION OF THE INVENTION

The invention will be better understood with the aid of the following description of a preferred embodiment of the assembly of container and lid, with reference to the annexed drawing, on which:
Figure 1 represents a perspective view of a first embodiment of the assembly of the invention;
Figure 2 represents an exploded perspective view of the assembly of figure 1, the lid having been removed from the container;
Figure 3 is a perspective view of a second embodiment of the assembly of the invention;
Figure 4 is a perspective view of the assembly of figure 3, turned by 90°; and
Figure 5 is a perspective view of the container of the assembly of Figures 3 and 4.

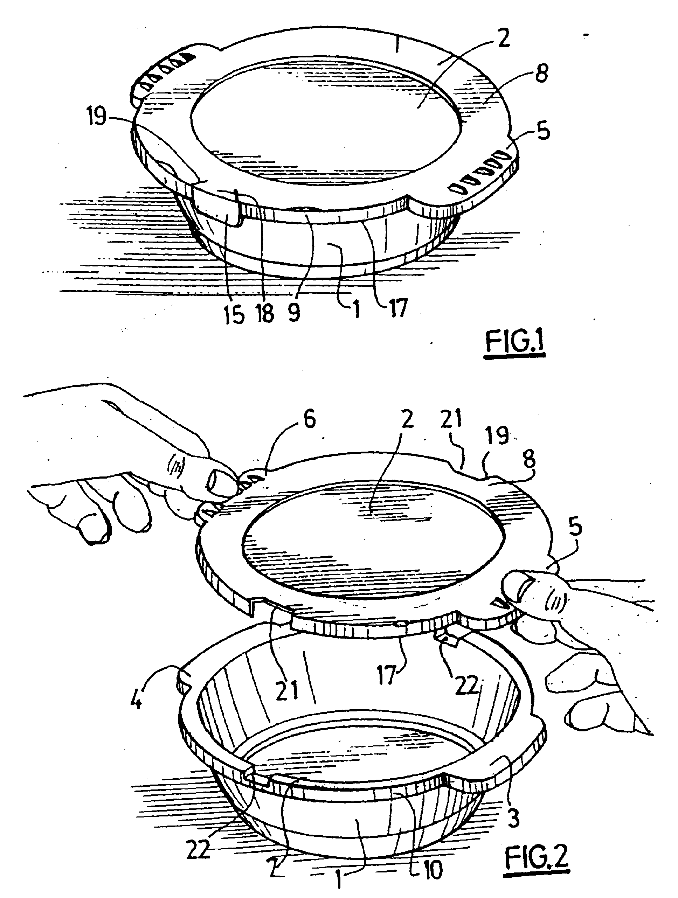

Figures 1 and 2 are simplified by comparison with the others and are intended above all to illustrate the handling of the container and the lid of the assembly of the invention. For this reason, in a desire for simplification, the same elements of the two groups of Figures will be designated by the same reference numerals.

The assembly comprises a circular container 1, in this instance in the form of a bowl, and a circular lid 2, designed to cooperate therewith. Container 1 has a pair of diametric gripping handles, or lower lugs 3, 4, that project like ears therefrom. Lid 2 has a pair of diametric gripping handles, or upper lugs 5, 6, that project like ears therefrom.

Container 1 and lid 2 have their respective annular, substantially horizontal, edges 7, 8 matched in rib and groove configuration, engaging one another by clipping in order to close container 1 by lid 2.

Lid 2 is bounded by circular external wall 9, which projects substantially vertically from edge 8. Container 1 is bounded at its top by annular external wall 10, which projects substantially vertically from edge 7. External wall 10 tapers into external wall 30 defining the lower portion of container 1.

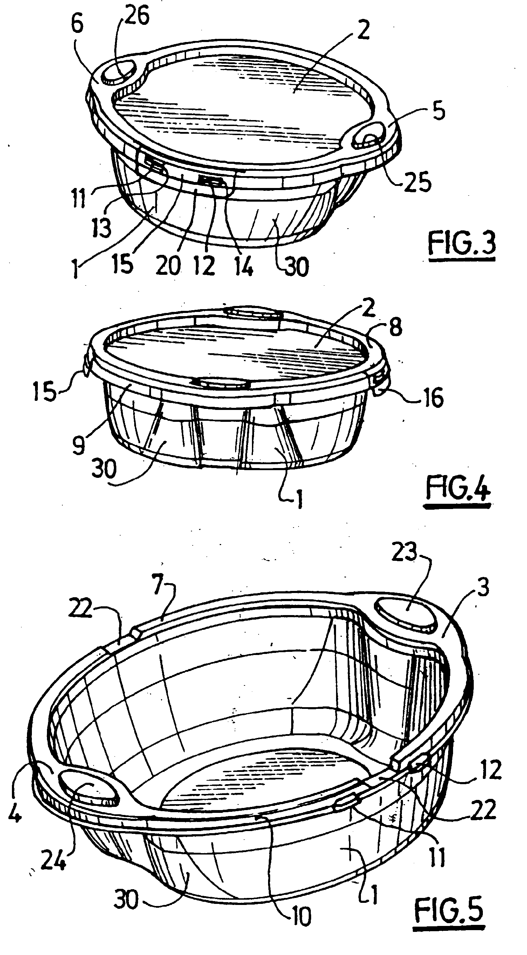

External wall 10 of edge 7 of container 1 carries projecting therefrom two diametrically opposite pairs of tenons 11, 12 (Fig. 5). Tenons 11, 12 project slightly towards the exterior and are intended to engage by insertion respectively into two pairs of slots or mortises 13, 14 (Fig. 3) formed in two diametric detachable tabs 15, 16 of edge 8 of lid 2. With mortises 13, 14 receiving tenons 11, 12, detachable locking tabs 15, 16 are locked onto container 1 by a mortise and tenon joint.

External wall 9 comprises an interior annular flange 17 (Figs. 1 and 2) intended to engage external wall 10, or a flange of the latter, delimiting the rib of edge 7 of container 1.

With reference to Figs. 1, 3 and 4, each detachable tab 15, 16 is formed by a portion 20 of exterior wall 9 of edge 8 of lid 2, extending slightly beyond flange 17, and by a sector 18 of the extreme border of edge 8, adjacent to wall 9. Referring to Fig. 2, portion 20 and sector 18 are delimited by lines of weakening 19 to facilitate the detachment of tabs 15, 16 by breaking along lines of weakening 19. Lines of weakening 19 can be realized by a series of perforations. To break off tabs 15, 16, it is sufficient to exert a pivoting action upwards via portion 20 of detachable tabs 15, 16 to be used as a lever to break lines of weakening 19, break off and detach tabs 15, 16 and form cut-outs 21 in lid 2. Cut-outs 21 have a drainage function, as described in more detail below. Figure 2 shows lid 2 after tabs 15, 16 have been detached.

With reference to Figure 3, when lid 2 is in a closed position assembled on container 1, tenons 11, 12 being engaged in the mortises 13, 14 of the tabs 15, 16, lid 2 is locked onto container 1, thus assuring the consumer that container 1 has not been opened.

With reference to Figure 5, edge 7 of container 1 has open upwards openings 22 formed thereon between each pair of tenons 11, 12, serving as outflow and drainage channels. In the closed position of lid 2 on container 1 and after having detached tabs 15, 16, cut-outs 21 in lid 2 edge are lined up with the outflow and drainage channels 22 of edge 7 of container 1, which are thus freed.

The following are examples of the present invention, and are not meant to be limiting in any way.

### Example 1. Use of the Assembly Like a Strainer

The assembly is used in the following manner. Container 1 contains, for example, pasta to be rehydrated and reheated in order to be consumed. Tabs 15, 16 are detached and lid 2 of container 1 is removed. Container 1 is filled with hot water and lid 2 is closed again, with drainage cutouts 21 of lid 2 in line with outflow channels 22 of container 1.

The pasta is left for a few minutes to rehydrate and reheat. Following the re-hydration and reheating, the assembly is used like a strainer emptying the water from container 1 through drainage channels 22 and cutouts 21, before removing lid 2 and placing in a plate the pasta which is ready to be consumed.

### Example 2. Removal of Lid To Avoid Burning

Referring to Figures 3 to 5, lugs 3, 4 of container 1 comprise raised parts 23, 24 formed thereon. Lugs 5, 6 of lid 2 comprise apertures or windows 25, 26 to receive raised parts 23, 24, transforming lower gripping lugs 3, 4 into separating lugs, whereby the raised parts 23, 24 are accessible through openings 25, 26.

When container 1 closed by lid 2 is placed on a table, it is possible, through apertures 25, 26 of lid lugs 5, 6, to press on container 1 via raised parts 23, 24 of lugs 3, 4 and raise lid 2 without touching wall 30 of container 1. Thereby, risk of burning oneself when container 1 is filled with hot water is avoided, particularly if container 1 is made of a material which does not conduct heat, for example polypropylene.

It will be noted that lower lugs 3, 4, or handles, of container 1, and lid 2 ensure a function of indexing lid 2 on container 1 in order to position cutouts 21 correctly opposite the drainage channels 22.

While the assembly of the invention has been described with reference to preferred embodiments thereof, as will be apparent to those skilled in the art, certain changes and modifications can be made without departing from the scope of the invention as defined by the following claims.
- 1: container
- 2: lid
- 3, 4: lower lugs (or handles) - for gripping container 1
- 5,6: upper separating lugs of lid
- 7: edge of container 1
- 8: edge of lid
- 9: external wall on lid
- 10: external wall of edge 7 on container

- 11, 12: pair of tenons (engage in joint mortises 13,14)
- 13, 14: pair of mortises (slots)

- 15, 16: detachable locking tabs on lid
- 17: interior annular flange on wall 9 (on lid 2)
- 18: sector
- 19: lines of weakening
- 20: portion
- 21: cut-outs on lid (Fig. 2)
- 22: (outflow and) drainage **channel** - open upwards opening

- 23: raised part on lug 3
- 24: raised part on lug 4

- 25, 26: **apertures** on lugs of lid (window)

- 30: wall of container

## Claims

1. An assembly comprising a container and a removable protective lid,
said container and said lid each comprising edges arranged thereon by which said container and said lid co-operate to close said container,
said edge of said container having a plurality of drainage channels formed therein,
wherein said lid comprises a plurality of detachable tabs arranged thereon for locking said lid on said container, and
wherein said tabs are detachable to free said drainage channels in the closed position of said lid.

2. The assembly according to claim 1, wherein said lid is provided with at least one detachable tab locked onto said container.

3. The assembly according to claim 2, wherein said detachable locking tab is locked onto said container by a mortise and tenon joint.

4. The assembly according to claim 3, wherein said detachable locking tab includes a pair of mortises formed therein.

5. The assembly according to claim 1, wherein said edge of said container has a plurality of tenons formed thereon.

6. An assembly comprising a container and a removable protective lid,
said container and said lid each comprising edges arranged thereon by which said container and said lid co-operate to close said container,
said edge of said container having a plurality of drainage channels formed therein, said container further comprising a wall,
wherein said container and said lid are arranged to be able to exert a supporting action on said container while raising and separating said lid without touching said wall of said container.

7. The assembly according to claim 6, wherein said container comprises lower separating lugs projecting like ears therefrom and said lid comprises upper separating lugs projecting like ears therefrom, said lower separating lugs each having raised parts formed thereon, said upper lugs having apertures formed therein,
wherein said raised parts are accessible through said apertures.

8. The assembly according to one of claims 1 or 6, wherein said container is made of a material which does not conduct heat.
